Europäisches Patentamt

(19) **European Patent Office**

**Office européen des brevets**

(11) Publication number: **0 059 494**

**A1**

## (12) EUROPEAN PATENT APPLICATION

(21) Application number: **82200158.2**

(22) Date of filing: **10.02.82**

(51) Int. Cl.³: **B 23 Q 17/04**

(30) Priority: **12.02.81 NL 8100690**

(43) Date of publication of application:
**08.09.82 Bulletin 82/36**

(84) Designated Contracting States:
**BE DE FR GB IT NL SE**

(71) Applicant: **N.V. Gereedschapswerktuigenindustrie Hembrug**
**Hemkade 24a P.O.Box 412**
**NL-1500 EK Zaandam(NL)**

(72) Inventor: **Deaves, Donald Henry Thomas**
**No. 47, Pheasants Way**
**Rickmansworth Hertfordshire(GB)**

(74) Representative: **'t Jong, Bastiaan Jacobus et al,**
**OCTROOIBUREAU ARNOLD & SIEDSMA Sweelinckplein 1**
**NL-2517 GK 's-Gravenhage(NL)**

(54) **Tool changer.**

(57) A tool changer (7) of a machine tool comprising a housing (201), a tool carrier (50) rotatably journalled in said housing (201) and carrying a plurality of holders (209) for tool pieces (49) and positioning means comprising a motor (204) coupled with said tool carrier (50) for moving a tool piece (49) by rotation of the tool carrier (50) into an operative position and for holding it in said position, said positioning means comprising a rotatable coupling part (210) rigidly connected with the tool carrier (50) and provided with a head toothing (241), and a non-rotatable coupling part (214) non-rotatably connected with the housing (201) and having a co-operating toothing (240) and comprising coupling means for bringing said coupling parts (210, 214) into mesh with one another, whilst the holders (209) are arranged on the tool carrier (50) in angular positions corresponding with the angular positions of the teeth of the head toothing (240, 241) and the coupling means comprise a hydraulic piston-cylinder assembly formed by a slidable coupling part (216) and the housing (201), whereas pressurized hydraulic fluid feeding means are provided for loading said assembly in the direction of relative engagement of the coupling parts (210, 214).

./...

FIG.4

TOOL CHANGER

The invention relates to a tool changer of a
machine tool comprising a housing, a tool carrier rotatably
journalled in said housing and carrying a plurality of
holders for tool pieces and positioning means comprising a
motor coupled with said tool carrier for moving a tool piece
by rotation of the tool carrier into an operative position
and for holding it is said position, said positioning means
comprising a rotatable coupling part rigidly connected with
the tool carrier and provided with a head toothing, and a
non-rotatable coupling part non-rotatably connected with the
housing and having a co-operating toothing and comprising
coupling means for bringing said coupling parts into mesh
with one another, whilst the holders are arranged on the tool
carrier in angular ·positions corresponding with the angular
positions of the teeth of the head toothing and the coupling
means comprise a hydraulic piston-cylinder assembly formed by
a slidable coupling part and the housing.

The machine tool in which the tool changer
according to the invention can be employed may be a
numerically controlled lathe, whilst the tools mounted in the
tool changer are turning tools and the like. In order to
permit of attaining a high production rate the tool carrier holds all tools required for the manufacture of one work piece. The tool changer each time moves the required tool and retains it in an operative position relative to the work piece to be machined. It is highly important for the tool changer to constitute a rigid support for the tool in order to ensure accurate machining of the work piece. Particularly in the case of numerically controlled lathes, which operate with high speeds and large cutting depths so that heavy forces are involved, a rigid support is of paramount importance. Moreover, in order to minimize the overall cyclic time of the manufacture of a single work piece the tool changer must be capable of moving the desired tool into the correct position and of holding it very accurately in said position.

The invention has for its object to provide a tool changer which satisfies the above mentioned requirements.

According to the invention in a tool changer of the kind seth forth, this is achieved by pressurized hydraulic fluid feeding means for loading said assembly in the direction of relative engagement of the coupling parts.

In the German Patent Application 2735120 a hydraulic piston-cylinder construction is used, to disengage the coupling members. According to the invention the hydraulic system is used to maintain a high coupling force and therefore to obtain a very rigid structure in the working position.

According to the invention, in order to allow a most rapid change of the tool pieces, the motor is a reversible electric motor. Thus a desired tool piece can be rotated into the operative position along the shortes possible distance determined by the control-device.

Since the tool carrier has a relatively high inertia moment, it is desirable for quick action of the tool changer to be able to exert a high torque on the tool carrier. According to the invention this is obtained by a harmonic retarding drive coupling the motor with the tool carrier and comprising an annular toothed wheel rigidly secured to the housing, a pivotable satellite toothed wheel non-rotatably connected with the tool carrier and a satellite carrier coupled with the motor. In this way a high retardation and hence a high torque on the tool carrier can be obtained, whilst the construction is compact.

Further features and advantages of the invention will become apparent from the following description of an embodiment of the invention with reference to the drawings.

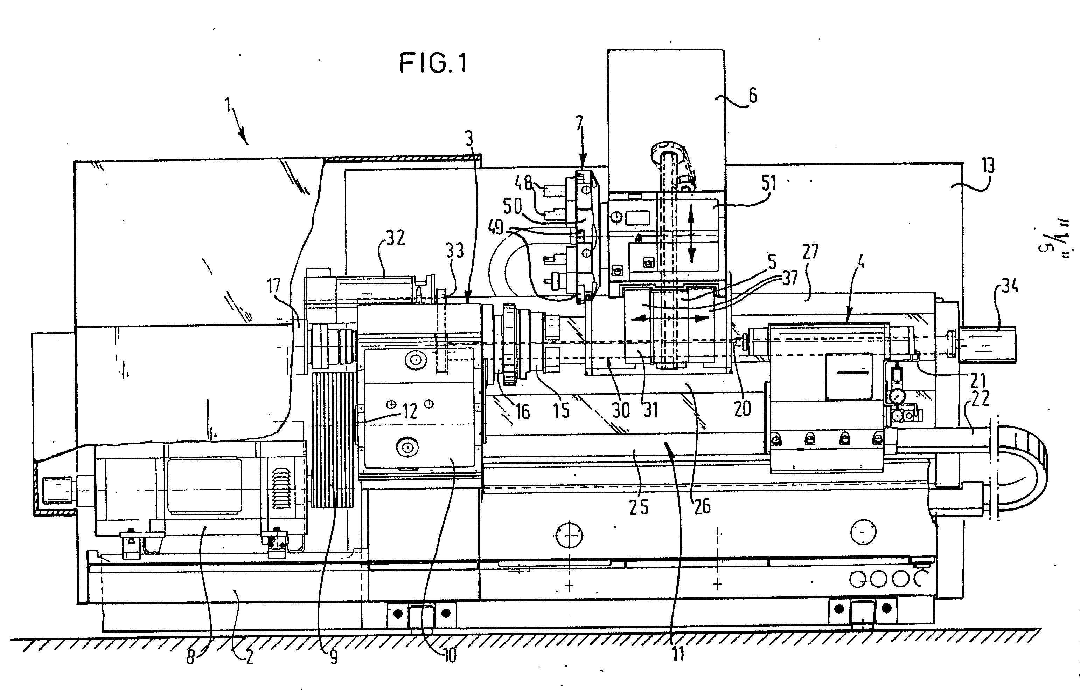

Fig. 1 is a front view of a lath in which the tool changer embodying the invention is employed.

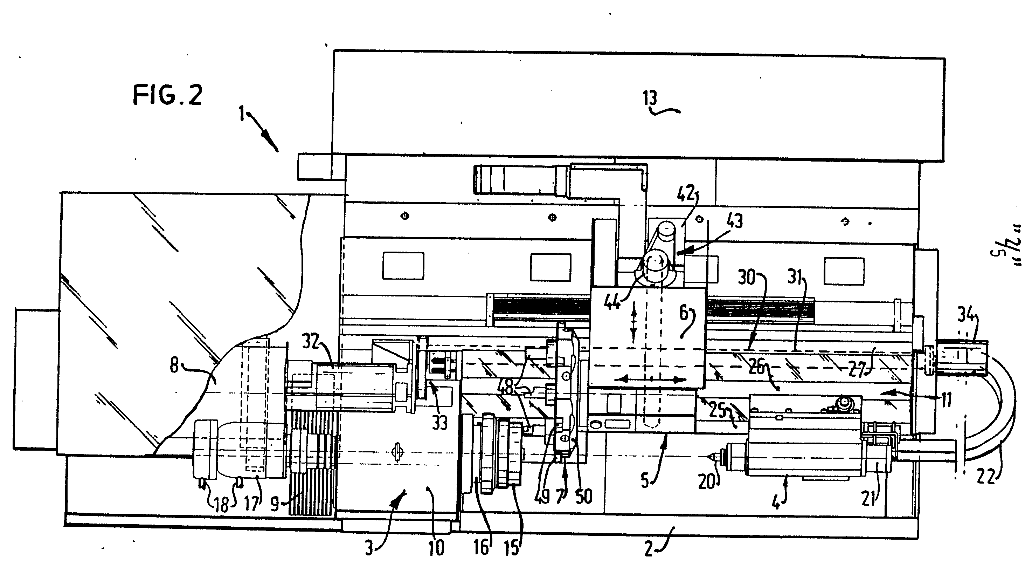

Fig. 2 is a plan view of the lathe of Fig. 1.

Fig 3 is a side elevation from the right-hand side of the lathe shown in Figs. 1 and 2.

Fig. 4 is a longitudinal sectional view of the tool changer embodying the invention used on the lathe shown in the preceding Figures.

Fig. 5 is a schematic, perspective view of part of the tool changer shown in Fig. 4.

Fig 6 is a front view of the tool changer of Fig. 4, the tool carrier being shown.

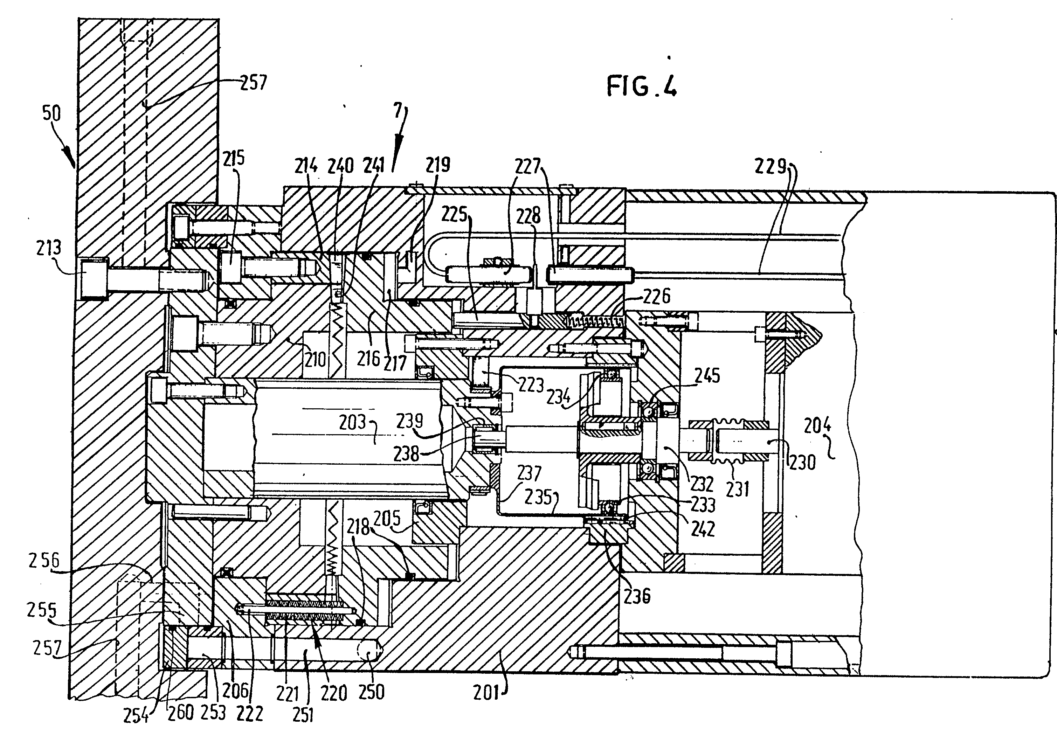

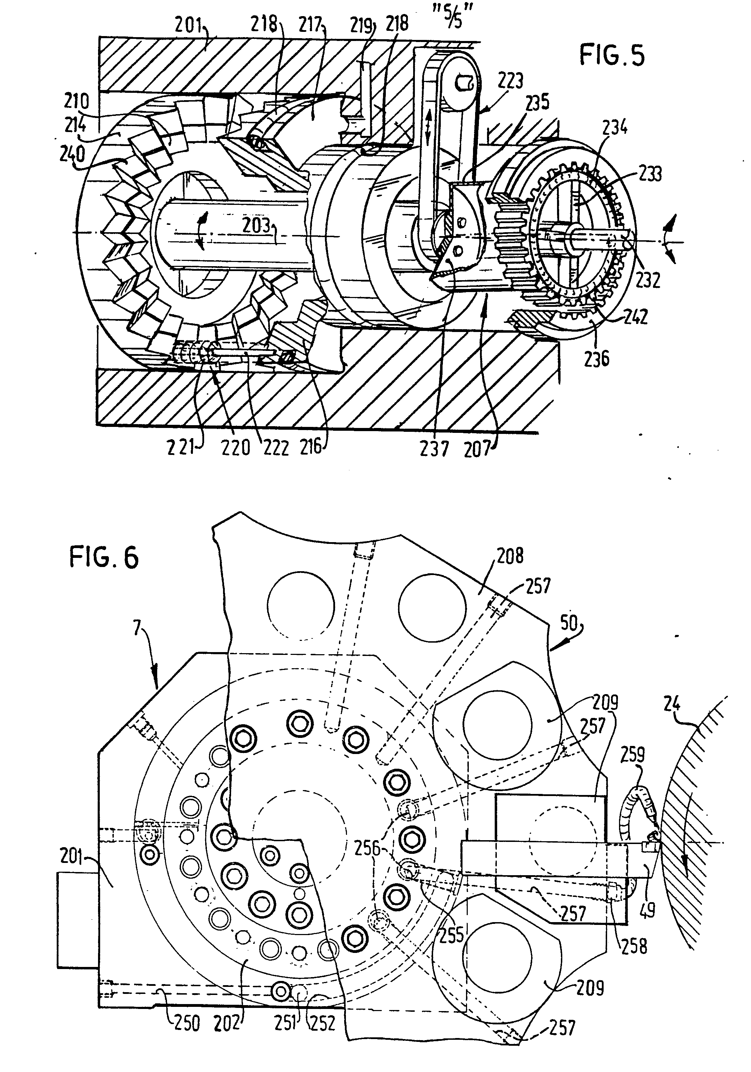

The frame 2 of the lathe 1 comprises a bed 11 arranged at an angle to the horizontal. With the frame is connected a head stock 3 and on the bed 11 is arranged a tail stock 4, which is displaceable towards and away from the head stock 3, and fixable in position. On the bed 11 is also arranged a support 5, which is displaceable towards and away from the head stock 3 and which comprises a transverse slide 6 displaceable at right angles to the displacing means. With the transverse slide 6 is connected a tool changer 7 according to the invention, which comprises a plurality of turning tools 48, 49 to be placed at will in an operative position. The tool changer 7 will be described in detail with reference to Figs. 4, 5 and 6.

The head stock 3 comprises a main spindle 16 carrying work piece gripping means formed by a chuck plate 15. The main spindle 16 is mounted in a gear box 10 which comprises a gear wheel transmission. The input shaft 12 of the gear box 10 is coupled through a belt transmission 9 with a driving motor 8. The driving motor 8 is a direct-current motor of controllable speed. The gear wheel transmission in the gear box 10 has a high and a low transmission ratio switchable at will by means of magnetic clutches. Owing to these two transmission ratios in conjunction with the controllable speed of the electric motor 8 the main spindle 16 can be rotated at any desired rate. The chuck plate 15 is actuated by a hydraulic control-device 17 of a kind known per se, which is governed by a pedal (not shown). Through the hydraulic ducts 18 pressurized hydraulic fluid is fed to or drained from the control-device 17 for clamping a work piece in or removing it from the chuck plate 15 respectively. By actuating the chuck plate 15 by means of a pedal a ready work piece can be very rapidly changed against a semi-product to be further machined. This fast changeability contributes to a high productivity.

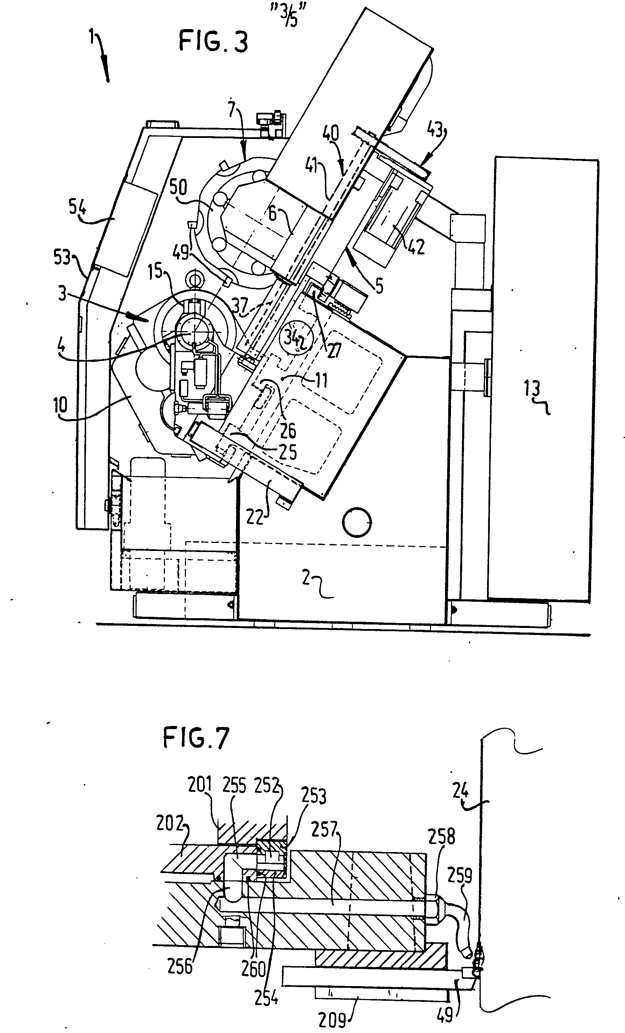

It will be clearly apparent from Fig. 3 that the bed 11 comprises three planed ways 25, 26, 27. The tail stock 4 is mounted on the lower way 25 and the middle way 26. The support 5 is mounted on the middle way 26 and on the upper way 27. The tail stock 4 can be displaced on the bed 11 towards and away from the chuck plate 15. The tail stock 4 has a center 20 located on the centre line of the main spindle 16. The tail stock 4 also comprises hydraulic means 21 by means of which the center 20 can be loaded in the direction towards the main spindle 16 for gripping a work piece with respect to the tail stock 4. The hydraulic means 21 are also governed by a pedal (not shown) so that during operation a work piece can be rapidly clamped in with the aid of the center 20 and a ready work piece can be as rapidly changed against a semi-product to be further machined. The hydraulic inlet and outlet ducts for the hydraulic means 21 are accommodated in a flexible conduit gutter 22.

The support 5 can be displaced in the longitudinal direction of the bed 11 and hence parallel to the centre line of the main spindle 16 by means of a longitudinal gear 30. The longitudinal gear 30 comprises a screw spindle which is located below the level of the ways 25, 26, 27 and which can be rotated by an electric motor 32 through a toothed belt transmission 33. On the lower side of the support 5 is mounted in known manner a roving nut engaging the screw spindle so that upon rotation of the screw spindle 31 the support 5 is displaced in the longitudinal direction.

The support 5 has two planed ways 37 extending in a direction at right angles to the ways on the bed 11. The transverse slide 6 is displaceable on said ways 37. Like the support the transverse slide 6 is displaceable by means of a transverse gear 40. The tranverse gear 40 comprises a screw spindle 41, which can be rotated by an electric motor 42 through a toothed belt transmission 43. The screw spindle 41 also co-operates with a roving nut mounted at the bottom side of the transverse slide 6.

On the transverse slide 6 is mounted the tool changer 7 comprising a tool carrier 50 and a positioning device 51 for the same. At the circumference of the tool carrier 50 can be arranged six external turning tools 49 and at the front face of the tool carrier 50 six inner turning tools 48. The positioning device 51 comprises a motor capable of rotating the tool carrier 50 into the desired position for moving the tool 48, 49 concerned into the operative position.

The lathe is controlled by a numerical control-device arranged in the casing 13. The casing 13 also accommodates the feed for he motor 8. The screw spindle 31 of the longitudinal gear 30 is coupled with an encoder 34, which applies digital signals to the control-device for assessing the rotational position of the screw spindle. By means of these signals the control-device can assess the longitudinal position of the support 5 on the bed 11. In a corresponding manner the screw spindle 41 of the transverse gear 40 is coupled with an encoder 44 for assessing the transverse position of the tool changer 7 on the bed 11. The main spindle 16 is also coupled with an encoder (not shown) so that the rotational position of the main spindle can also be assessed by the control-device. The electric motors 32 and 42 of the longitudinal and the transverse gears respectively are actuated by the control-device. Moreover, this control-device controls the driving motor 8 and the tool changer 7. With the aid of a control-panel (not shown) a machining programme can be introduced into a memory of the control-device for manufacturing a desired work piece.

Fig. 3 furthermore shows that the lathe 1 is provided with a sliding door 53 having a window 54. The sliding door 53 is closed when a work piece is turned in order to retain scattering coolant and chips.

The tool changer 7 comprises a housing 201, in which the tool carrier 50 is rotatably journalled. The tool carrier 50 comprises a shaft 203, a fastening plate 202 secured by bolts 212 to the shaft 203 and a holder plate 208 secured by bolts 213 to the fastening plate 202. The holder plate 208 has a plurality of holders 209 for tools, that is to say, inner turning tools 48 and outer turning tools 49. In the embodiment shown the holder plate 208 comprises twelve holders 209 positioned at 30 degrees intervals from one another. With the housing 201 is connected a hindmost bearing ring 205 holding the shaft 203 and a foremost bearing ring 206 holding a coupling part 210 rigidly connected by means of bolts 211 with the tool carrier 50, which part will be described more fully hereinafter. The tool carrier 50 can be driven through the harmonic drive 207 by a direct-current motor 204.

The coupling part 210 rigidly connected with the tool carrier 50 has, on its side remote from the holder plate 208, a head toothing 241, preferably a Hirth toothing. A non-rotatable coupling part 214 is rigidly connected by means of bolts 215 with the foremost bearing plate 206 so as to be concentric with said rotatable coupling part 210. The non-rotatable coupling part 214 has a head toothing 240, which is directed in the same direction as the head toothing 241 of the rotatable coupling part 210. Opposite the rotatable coupling part 210 and the non-rotatable coupling part 214 is arranged a slidable coupling part 216, which is also provided with a head toothing directed towards the toothings 240 and 241. The slidable coupling part 216 can be moved to the right and back by displacing means from the position shown in Fig. 4 into engagement with the rotatable coupling part 210 and the non-rotatable coupling part 214. For the movement into the position shown in Fig. 4 the slidable coupling part 216 is constructed in the form of a cylinder slidable in the housing 201. Pressurized fluid can be introduced into the cylinder chamber 217 formed between the slidable coupling part 216 and the housing 201 via a feeding duct 219. In suitable grooves in the periphery of the slidable coupling part 216 are arranged sealing O-rings 218. When via the feeding ducts 219 pressurized fluid is fed, the slidable coupling part 216 is vigourously pressed by its head toothing into te head toothings of the rotatable coupling part 210 and of the fixed coupling part 214. Thus the rotatable coupling part 210 and hence the tool carrier 50 are immovably fixed in one given rotational position. Owing to the hydraulic pressure prevailing in the chamber 217 the coupling part 210 is vigourously urged against the foremost bearing ring 206 so that the tool carrier 50 together with the housing 201 constitutes a very rigid unit.

In order to rotate the tool carrier 50 to move a further tool 48, 49 into an operative position, the fluid pressure is removed through the feeding duct 219 so that the reset means 220 formed by a sequence of cup springs 221 arranged about a pin 222 and being operative between the foremost bearing ring 206 and the slidable coupling part 216 move the slidable coupling part 216 to the right. Thus the engagement of the fixed coupling part 214 with the rotatable coupling part 210 is released so that the motor 204 can rotate the tool carrier 50.

Although Fig. 4 shows a preferred embodiment of the tool changer according to the invention, it is possible to use, as an alternative, a two-part coupling provided with head toothings. In this case the non-rotatable coupling part 214 can be omitted and the slidable coupling part 216 can be arranged, for example, by means of a spline in the housing so as to be non-rotatable, but slidable.

The shaft 203 is coupled through a toothed belt transmission 223 with an encoder (not shown), which is connected with a numerical control-device of the lathe. By means of said encoder the control-device can assess the rotational position of the tool carrier 50. The position of the slidable coupling part 216 is communicated by means of position sensors 227 to the control-device. For this purpose a scanning pin 225 is continuously held in contact with the slidable coupling part 216 by a spring 226. The scanning pin 225 has a transverse arm 228, which co-operates with the position sensors 227. The sensors 227 are coupled through leads 229 to the control-device. With the aid of the data obtained from the sensors 227 and the encoder (not shown) the control-device controls the fluid supply to the cylinder chamber 217 and the motor 204.

The output shaft 230 of the motor 204 fixed to the housing 201 is connected by means of a coupling 231 with the shaft 232 of the harmonic drive 207. The shaft 232 is journalled at its end near the motor 204 in a bearing 245 and a stub of said shaft at the opposite end is journalled by means of a bearing 239 in the shaft 203. The harmonic drive 207 comprises an annular wheel 326, which is rigidly secured to the housing 201. The inner toothing of the ring wheel 236 is at one point of its curcumference in mesh with the toothing 242 forming a satellite gear wheel of the non-rotatable bushing 235 connected with the shaft 203. The bushing 235 is constructed so that the bottom 237 therof is flexible. Thus the part of the bushing 235 carrying the toothing 242 can be urged into an eccentric position. A satellite wheel 233 eccentrically arranged on the shaft 232 exerts through a bearing 234 such a force on the bushing 235 that the toothing 242 thereof is urged into an eccentric position. The toothing 234 of the bushing 235 has a lower number of teeth than the ring wheel 236. Therefore, the diameter of the toothing 234 is smaller than the diameter of the ring wheel 236. The eccentricity of the satellite carrier 233 is such that the radially most protruding part thereof urges the toothing 234 into mesh with the ring wheel 236. The proportioning is such that at the part opposite the engaged part the toothing is completely free of the ring wheel 236. By rotating the satellite carrier 233 driven by the motor 204 the toothing 242 rolls down in the ring wheel 236. The result is that after a complete revolution of the satellite carrier 233 the toothing 242 and hence the tool carrier 50 connected through the bushing 235 with said toothing is turned through part of a complete revolution in a direction opposite the direction of rotation of the satellite carrier, said part corresponding to the quotient of the difference between the numbers of teeth of the ring wheel 236 and the toothing 242 and the number of teeth of the ring wheel 236. If, for example, the ring wheel has 120 teeth and the toothing 242 has 115 teeth, the satellite carrier 233 will turn in one revolution the tool carrier 50 over (120 - 115) / 120 = 1/24th revolution. By this harmonic drive a compact structure with an advantageously high transmission ratio can be obtained.

The motor 204 is kept operative by the control-device for a time sufficient for a desired tool piece to attain its operative position. Subequently the coupling part 216 is again urged into the position shown in Fig. 4 by feeding pressurized fluid to the cylinder chamber 217 so that the tool carrier 50 is fixed in the correct position. The head toothings of the coupling parts 210, 214 and 216 comprise twelve or an integer multiple of twelve teeth. Since the chisel holders are relatively off-set through an angel of 30 degrees, an operative position of a tool piece in a holder invariably corresponds with an engaged position of the coupling parts. Although the number of twelve holders is preferred, any other number of holders may be used provided, in accordance with the invention, the holders are arranged on the tool carrier in angular positions corresponding with the angular positions of teeth of the head toothing.

The tool changer according to the invention comprises a channel system for supplying a coolant, the construction thereof being such that coolant is fed solely to the tool occupying its operative position. This channel system comprises a supply channel 250 extending at right angles to the centre line of the tool changer and being provided in the foot of the housing 201 of the tool changer 7 and a transverse channel 251 leading to the side of the tool carrier 50. The transverse channel 251 communicates with a channel formed by the slot 252 in the hindmost ring 253 connected with the housing 201 and the foremost ring 254 closing said slot on the top side. This channel formed by the slot 252 terminates in a transverse bore open towards the interior of the rings 254 and 253. The fastening plate 202 of the tool carrier 50 rotates inside the rings 253, 254. In a radial sense the fastening plate 202 has a number of communication channels 255 corresponding with the number of tool-piece holders 209, said channels leading to the front face of the fastening plate 202. The holder plate 208 has communicating channels 256 corresponding with the communicating channels 255. The channels 256 communicates with the channels 257 leading to the periphery of the holder plate 208. By means of a cap nut 258 each channel 257 has connected with it a flexible duct 259, which can direct the coolant supplied through the channel system to the work piece 24 where the associated tool 49 is in contact with the work piece 24. Since each time only the communicating channel 256 is associated with the tool holder 209 occupying the operative position is connected with the communicating channel 255, coolant is supplied solely to the tool 48, 49 occupying the operative position. As is shown in the Figures sealing O-rings 260 are provided at appropiate places.

## CLAIMS

1. A tool changer of a machine tool comprising a housing, a tool carrier rotatably journalled in said housing and carrying a plurality of holders for tool pieces and positioning means comprising a motor coupled with said tool carrier for moving a tool piece by rotation of the tool carrier into an operative position and for holding it is said position, said positioning means comprising a rotatable coupling part rigidly connected with the tool carrier and provided with a head toothing, and a non-rotatable coupling part non-rotatably connected with the housing and having a co-operating toothing and comprising coupling means for bringing said coupling parts into mesh with one another, whilst the holders are arranged on the tool carrier in angular positions corresponding with the angular positions of the teeth of the head toothing and the coupling means comprise a hydraulic piston-cylinder assembly formed by a slidable coupling part and the housing, characterized by pressurized hydraulic fluid feeding means for loading said assembly in the direction of relative engagement of the coupling parts.

2. A tool changer as claimed in anyone of the preceding Claims characterized in that the motor is a reversible electric motor.

3. A tool changer as claimed in Claim 2 characterized by a harmonic retarding drive coupling the motor with the tool carrier and comprising an annular gear wheel rigidly secured to the housing, a pivotable satellite gear wheel non-rotatably connected with the tool carrier and a satellite carrier coupled with the motor.

FIG.1

FIG.2

00059494

0059494

FIG.3

FIG.7

FIG.4

0059494

FIG.5

FIG.6

## European Patent Office — EUROPEAN SEARCH REPORT

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| DY | DE - A - 2 735 120 (HEYLIGENSTAEDT) <br> * Page 8, lines 1-35 * <br> -- | 1 | B 23 Q 17/04 |
| Y | US - A - 3 464 292 (PARSONS) <br> * Column 3, lines 62-67 * <br> -- | 1 | |
| A | US - A - 3 618 426 (FISHER) <br> * Column 4, lines 71,72 * <br> -- | 2 | TECHNICAL FIELDS SEARCHED (Int.Cl. ³) |
| A | US - A - 2 959 065 (MUSSER) <br> * Claim 1 * <br> -- | 3 | B 23 Q 17/00 |
| A | US - A - 3 999 264 (CARMEN) | | |
| A | FR - A - 2 343 543 (ERNAULT) <br> ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 01-06-1982 | DE GUSSEM |

EPO Form 1503.1 06.78